# EUROPEAN PATENT APPLICATION

(11) **EP 4 240 095 A1**
(43) Date of publication of application: **06.09.2023**
(21) Application number: 23154741.5
(22) Date of filing: 02.02.2023
(51) Int. Cl.: H04W 76/18, H04W 36/08

(54) **METHOD FOR HANDLING SESSION MANAGEMENT TIMER AFTER INTERSYSTEM CHANGE**

(30) Priority: 09.02.2022 US 202263308179 P; 31.01.2023 US 202318103874
(71) Applicant: MEDIATEK INC., Hsinchu City 30078 (TW)
(72) Inventor: HUANG-FU, Chien-Chun, 30078 Hsinchu City (TW); CHEN, Bo-Hun, 30078 Hsinchu City (TW); LI, Shang-Wu, 30078 Hsinchu City (TW)
(74) Representative: Hoefer & Partner Patentanwälte mbB

(57) **Abstract**

A method of enhancing session continuity for system interworking is proposed. Upon intersystem change from S1 mode to N1 mode, a UE may perform deregistration when reregistration is required. The UE stops all 5GSM non-congestion back-off timers (501, 504). In addition to the 5GSM non-congestion back-off timers, there may be ESM non-congestion back-off timers running (501). The UE may take the RATC and the EPLMNC indicators in the Re-attempt indicator IE into consideration, and stops all ESM non-congestion timers (504). Upon intersystem change from N1 mode to S1 mode, the UE may perform detach procedure when re-attach is required. The UE stops all ESM non-congestion back-off timers (501, 504). In addition to the ESM non-congestion back-off timers, there may be 5GSM non-congestion back-off timers running (501). The UE may take the RATC and the EPLMNC indicators in the Re-attempt indicator IE into consideration, and stops all 5GSM non-congestion timers (504).

## Description

### CROSS REFERENCE TO RELATED APPLICATIONS

This application claims priority under 35 U.S.C. §119 from U.S. Provisional Application Number 63/308,179, entitled "Handling of the Session Management Timer of the other System", filed on February 9, 2023, the subject matter of which is incorporated herein by reference.

### TECHNICAL FIELD

The disclosed embodiments relate generally to wireless communication, and, more particularly, to method of handling a session management timer after performing intersystem change.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems (5GS).

In 4G evolved packet system (EPS), a Packet Data Network (PDN) connectivity procedure is an important process when LTE communication system accesses to the packet data network. The purpose of PDN connectivity procedure is to setup a default EPS bearer between a UE and the packet data network. In 5G, a Protocol Data Unit (PDU) session establishment is a parallel procedure of the PDN connectivity procedure in 4G. A PDU session defines the association between the UE and the data network that provides a PDU connectivity service.

If a UE is registered in EPS, the UE may initiate PDN connectivity procedure for PDN connection (S1 mode). The UE may be configured with certain non-congestion back-off timers if the connectivity procedure is rejected. Upon intersystem change from S1 mode to N1 mode, the UE may perform deregistration when re-registration is required. The UE stops all 5GSM non-congestion back-off timers. However, in addition to the 5GSM non-congestion back-off timers, there may be ESM non-congestion back-off timers running. Similarly, if a UE is registered in 5GS, the UE may initiate PDU session establishment procedure for PDU session (N1 mode). The UE may be configured with certain non-congestion back-off timers if the establishment procedure is rejected. Upon intersystem change from N1 mode to S1 mode, the UE may perform detach procedure when re-attach is required. The UE stops all ESM non-congestion back-off timers. However, in addition to the ESM non-congestion back-off timers, there may be 5GSM non-congestion back-off timers running.

A solution is sought.

### SUMMARY

A method and a user equipment according to the invention are defined in the independent claims. The dependent claims define preferred embodiments thereof. In particular, the user equipment according to the invention is preferably adapted to perform the steps of the method according to the invention. A method of enhancing session continuity for system interworking is proposed. Upon intersystem change from S1 mode to N1 mode, a UE may perform deregistration when re-registration is required. The UE stops all 5GSM non-congestion back-off timers. In addition to the 5GSM non-congestion back-off timers, there may be ESM non-congestion back-off timers running. The UE may take the RATC and the EPLMNC indicators in the Re-attempt indicator IE into consideration, and stops all ESM non-congestion timers. Upon intersystem change from N1 mode to S1 mode, the UE may perform detach procedure when re-attach is required. The UE stops all ESM non-congestion back-off timers. In addition to the ESM non-congestion back-off timers, there may be 5GSM non-congestion back-off timers running. The UE may take the RATC and the EPLMNC indicators in the Re-attempt indicator IE into consideration, and stops all 5GSM non-congestion timers.

In one embodiment, a UE starts a backoff timer in a first mobile communication system, wherein the backoff timer is not related to congestion control. The UE performs an intersystem change from the first system to a second system. The UE receives a non-access stratum (NAS) signaling message from the second system indicating that the UE is required to perform a re-registration procedure or a re-attach procedure in the second system. The UE stops the backoff timer that is started in the first system upon receiving the NAS signaling message in the second system. In one embodiment, the first mobile communication system is an evolved packet system (EPS), and wherein the second mobile communication system is a 5G system (5GS). The NAS signaling message is a de-registration request message from 5GS. In a second embodiment, the first mobile communication system is 5G system (5GS), and wherein the second mobile communication system is an evolved packet system (EPS). The NAS signaling message is a detach request message from EPS.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary mobile communication network for handling session management timer upon intersystem change in accordance with one novel aspect.
Figure 2 illustrates simplified block diagrams of a user equipment (UE) and a network entity in accordance with embodiments of the current invention.
Figure 3 illustrates a first embodiment of handling session management timer upon intersystem change from S1 mode to N1 mode in one novel aspect.
Figure 4 illustrates a second embodiment of handling session management timer upon intersystem change from N1 mode to S1 mode in one novel aspect.
Figure 5 is a flow chart of a method of handling session management timer upon intersystem change between S1 mode and N1 mode in accordance with one novel aspect of the present invention.

### DETAILED DESCRIPTION

Reference will now be made in detail to some embodiments of the invention, examples of which are illustrated in the accompanying drawings.

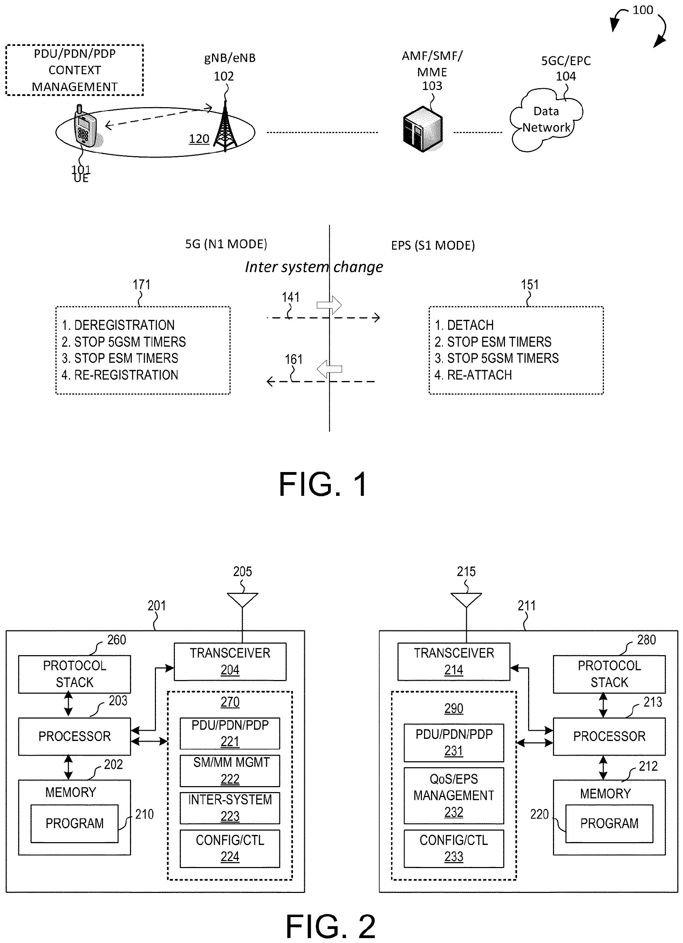

Figure 1 illustrates an exemplary mobile communication network 100 for handling session management timer upon intersystem change in accordance with one novel aspect. Mobile communication network 100 comprises a user equipment UE 101, a base station gNB/eNB 102, an Access and Mobility Management Function (AMF), Session Management Function (SMF), or mobility management entity (MME) 103, and a 5G/4G core network 5GC/EPC 104. In the example of Figure 1, UE 101 and its serving base station gNB 102 belong to part of a radio access network RAN 120. In Access Stratum (AS) layer, RAN 120 provides radio access for UE 101 via a radio access technology (RAT). In Non-Access Stratum (NAS) layer, AMF/SMF/MME 103 communicates with gNB 102 and 5GC/EPC 104 for access and mobility management and PDU session management of wireless access devices in network 100. UE 101 may be equipped with a radio frequency (RF) transceiver or multiple RF transceivers for different application services via different RATs/CNs. UE 101 may be a smart phone, a wearable device, an Internet of Things (IoT) device, and a tablet, etc.

EPS networks are packet-switched (PS) Internet Protocol (IP) networks. This means that the networks deliver all data traffic in IP packets, and provide users with IP Connectivity. When UE joins a 5GS network, a Packet Data Network (PDN) address (i.e., the one that can be used on the PDN) is assigned to the UE for its connection to the PDN. In 4G, a PDN connectivity procedure is an important procedure to setup a Default EPS Bearer between a UE and the packet data network. EPS has defined the Default EPS Bearer to provide the IP Connectivity. In 5G, a Protocol Data Unit (PDU) session establishment procedure is a parallel procedure of a PDN connectivity procedure in 4G. A PDU session defines the association between the UE and the data network that provides a PDU connectivity service.

If a UE is registered in EPS, the UE may initiate PDN connectivity procedure for PDN connection (S1 mode). The UE may be configured with certain non-congestion back-off timers if the connectivity procedure is rejected. Upon intersystem change from S1 mode to N1 mode, the UE may perform deregistration when re-registration is required. The UE stops all 5GSM non-congestion back-off timers. However, in addition to the 5GSM non-congestion back-off timers, there may be ESM non-congestion back-off timers running. Similarly, if a UE is registered in 5GS, the UE may initiate PDU session establishment procedure for PDU session (N1 mode). The UE may be configured with certain non-congestion back-off timers if the establishment procedure is rejected. Upon intersystem change from N1 mode to S1 mode, the UE may perform detach procedure when re-attach is required. The UE stops all ESM non-congestion back-off timers. However, in addition to the ESM non-congestion back-off timers, there may be 5GSM non-congestion back-off timers running.

In accordance with one novel aspect, a method of enhancing session continuity for system interworking is proposed. Upon intersystem change from N1 mode to S1 mode (141), UE 101 performs detach procedure in EPS when re-attach is required (151). The UE stops all ESM non-congestion back-off timers. The UE takes the RATC and the EPLMNC indicators in the Re-attempt indicator IE into consideration, and stops all 5GSM non-congestion timers, if running. Upon intersystem change from S1 mode to N1 mode (161), UE 101 performs deregistration when re-registration is required (171). The UE stops all 5GSM non-congestion back-off timers. The UE takes the RATC and the EPLMNC indicators in the Re-attempt indicator IE into consideration, and stops all ESM non-congestion timers, if running.

Figure 2 illustrates simplified block diagrams of wireless devices, e.g., a UE 201 and a network entity 211 in accordance with embodiments of the current invention. Network entity 211 may be a base station and/or an AMF/SMF/MME/SGSN/RAN. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control functional modules and circuit 290. PDU session and PDN connection and PDP context handling circuit 231 handles PDU/PDN/PDP establishment and modification procedures. QoS and EPS bearer management circuit 232 creates, modifies, and deletes QoS and EPS bearers for UE. Configuration and control circuit 233 provides different parameters to configure and control UE of related functionalities including mobility and session management and PDU/PDN/PDP management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise Non-Access-Stratum (NAS) layer to communicate with an AMF/SMF/MME/SGSN entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network.

In one example, system modules and circuits 270 comprise PDU session, PDN connection, and PDP context handling circuit 221 that performs PDU session and PDN connection establishment and modification procedures with the network, a session and mobility management circuit 222 that manages session and mobility parameters, an intersystem handling circuit 223 that handles intersystem change functionalities, and a config and control circuit 224 that handles configuration and control parameters for session and mobility management. In one novel aspect, upon intersystem change from a first system to a second system, UE 201 performs detach or registration when re-attach or re-registration is required. The UE stops all non-congestion back-off timers of the second system. The UE also takes the RATC and the EPLMNC indicators in the Re-attempt indicator IE into consideration, and stops all non-congestion timers of the first system.

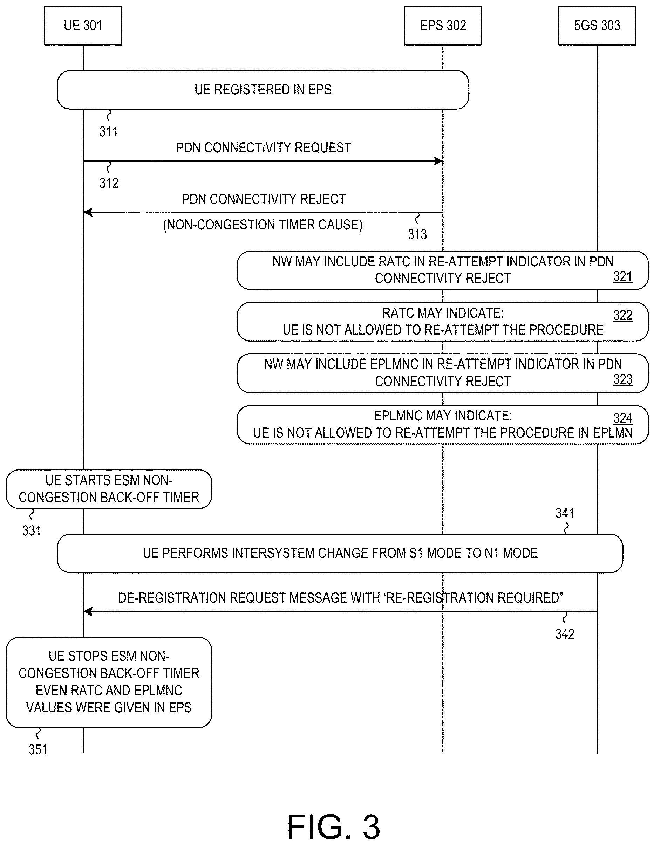

Figure 3 illustrates a first embodiment of handling session management timer upon intersystem change from S1 mode to N1 mode in one novel aspect. In step 311, UE 301 is registered in a first mobile communication system, e.g., EPS 302 (S1 mode). In order to setup a default EPS bearer between a UE and the packet data network, UE 301 initiates a PDN connectivity procedure in step 312, by sending a PDN connectivity request message to EPS 302. In step 313, UE 301 receives a PDN connectivity reject message from EPS 302, due to non-congestion related causes. The PDN connectivity reject message includes a non-congestion backoff timer, with a reject cause value (e.g., #8, #27, #32, #33). In the PDN connectivity reject message, the network may also include an RATC indicator in the re-attempt indicator IE sent to UE 301 (321). The RATC indicator may indicate that the UE is not allowed to re-attempt the PDN connectivity procedure in A/Gb mode, or Iu mode, or N1 mode (322). In the PDN connectivity reject message, the network may also include an EPLMNC indicator in the re-attempt indicator IE sent to UE 301 (323). The EPLMNC indicator may indicate that the UE is not allowed to re-attempt the PDN connectivity procedure in an equivalent PLMN (EPLMN) (324).

In step 331, UE 301 starts an ESM non-congestion backoff timer, as provided by the EPS network in step 313. The UE will not re-attempt the PDN connectivity procedure in EPS before the ESM backoff timer expires. Later on, in step 341, UE 301 performs an intersystem change from the first mobile communication network EPS (S1 mode) to a second mobile communication network 5GS (N1 mode). In step 342, UE 301 receives a DE-REGISTRATION REQUEST message from 5GS 303. Upon receiving the DEREGISTRATION REQUEST message, if the DEREGISTRATION REQUEST message indicates "re-registration required", the UE shall stop the timer(s) (e.g., T3346, T3396, T3584, T3585) and other 5GSM back-off timer(s) not related to congestion control, if running. In step 351, if UE 301 is operating in single-registration mode, the UE shall also stop all the ESM backoff timers (e.g., started in step 331) not related to congestion control, if running.

The UE may take the RATC indicator in the Re-attempt indicator IE into consideration. For example, if the RATC indication received in S1 mode indicates "UE is not allowed to re-attempt the procedure in A/Gb mode or Iu mode or N1 mode", then after the UE inter-system changes to N1 mode, the UE stops this ESM non-congestion back-off timer upon receipt of deregistration request message with "re-registration required". The UE may take the EPLMNC indicator in the Re-attempt indicator IE into consideration. For example, if the EPLMNC indication received in S1 mode indicates "UE is not allowed to re-attempt the procedure in an equivalent PLMN", then after the UE inter-system changes to N1 mode and/or moves to the EPLMN, the UE stops this ESM non-congestion back-off timer upon receipt of deregistration request message with "re-registration required".

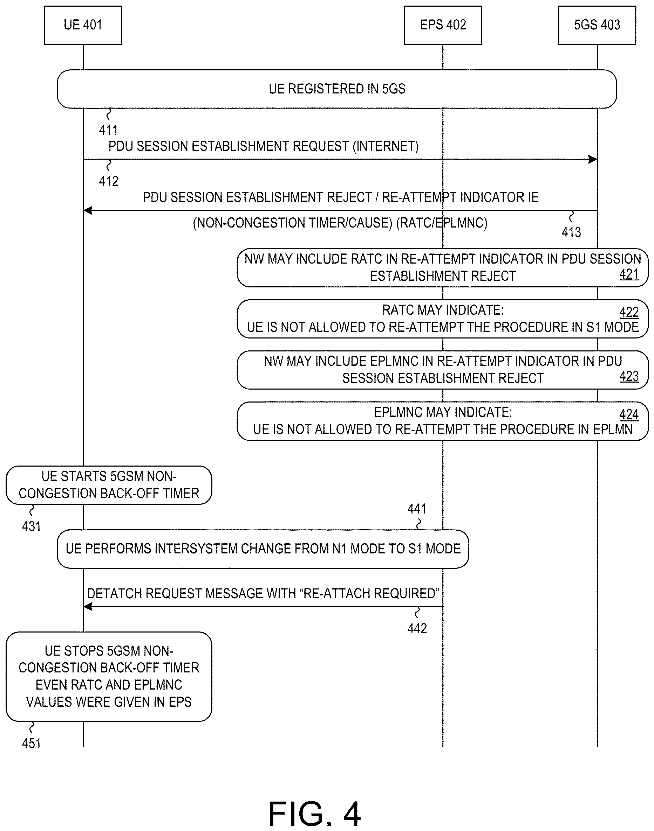

Figure 4 illustrates a second embodiment of handling session management timer upon intersystem change from N1 mode to S1 mode in one novel aspect. In step 411, UE 401 is registered in a first mobile communication system, e.g., 5GS 403. In order to associate the UE with the data network that provides a PDU connectivity service, UE 401 initiates a PDU session establishment procedure in step 412, by sending a PDU session establishment request message to 5GS 403. In step 413, UE 401 receives a PDU session establishment reject message from 5GS 403, due to non-congestion related causes. The PDU session establishment reject message includes a non-congestion backoff timer, with a reject cause value (e.g., #8, #27, #32, #33, #70). In the PDU session establishment reject message, the network may also include an RATC indicator in the re-attempt indicator IE sent to UE 401 (421). The RATC indicator may indicate that the UE is not allowed to re-attempt the PDU session establishment procedure in S1 mode (422). In the PDU session establishment reject message, the network may also include an EPLMNC indicator in the re-attempt indicator IE sent to UE 401 (423). The EPLMNC indicator may indicate that the UE is not allowed to re-attempt the PDU session establishment procedure in an equivalent PLMN (EPLMN) (424).

In step 431, UE 401 starts a 5GSM non-congestion backoff timer, as provided by the 5GS network in step 413. The UE will not re-attempt the PDU session establishment procedure in 5GS before the 5GSM backoff timer expires. Later on, in step 441, UE 401 performs an intersystem change from the first mobile communication network 5GS (N1 mode) to a second mobile communication network EPS (S1 mode). In step 442, UE 401 receives a DETACH REQUEST message from EPS 402. When receiving the DETACH REQUEST message and the detach type indicates "re-attach required", the UE shall also stop timer(s) (e.g., T3396), and other ESM back-off timer(s) not related to congestion control, if running. In step 451, if UE 401 is operating in single-registration mode, the UE shall also stop all the 5GSM backoff timers (e.g., started in step 431) not related to congestion control, if running.

The UE may take the RATC indicator in the Re-attempt indicator IE into consideration. For example, if the RATC indication received in N1 mode indicates "UE is not allowed to re-attempt the procedure in S1 mode", then after the UE inter-system changes to S1 mode, the UE stops this 5GSM non-congestion back-off timer upon receipt of detach request message with "re-attach required". The UE may take the EPLMNC indicator in the Re-attempt indicator IE into consideration. For example, if the EPLMNC indication received in N1 mode indicates "UE is not allowed to re-attempt the procedure in an equivalent PLMN", then after the UE inter-system changes to S1 mode and/or moves to the EPLMN, the UE stops this 5GSM non-congestion back-off timer upon receipt of detach request message with "re-attach required".

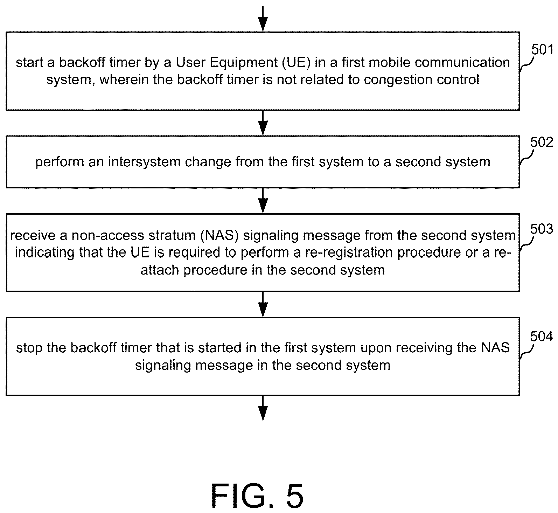

Figure 5 is a flow chart of a method of handling session management timer upon intersystem change between S1 mode and N1 mode in accordance with one novel aspect of the present invention. In step 501, a UE starts a backoff timer in a first mobile communication system, wherein the backoff timer is not related to congestion control. In step 502, the UE performs an intersystem change from the first system to a second system. In step 503, the UE receives a non-access stratum (NAS) signaling message from the second system indicating that the UE is required to perform a re-registration procedure or a re-attach procedure in the second system. In step 504, the UE stops the backoff timer that is started in the first system upon receiving the NAS signaling message in the second system. In one embodiment, the first mobile communication system is an evolved packet system (EPS), and wherein the second mobile communication system is a 5G system (5GS). The NAS signaling message is a de-registration request message from 5GS. In a second embodiment, the first mobile communication system is 5G system (5GS), and wherein the second mobile communication system is an evolved packet system (EPS). The NAS signaling message is a detach request message from EPS.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
starting a backoff timer by a User Equipment, in the following also referred to as UE, in a first mobile communication system, wherein the backoff timer is not related to congestion control (501);
performing an intersystem change from the first system to a second system (502);
receiving a non-access stratum, in the following also referred to as NAS, signaling message from the second system indicating that the UE is required to perform a re-registration procedure or a re-attach procedure in the second system (503); and
stopping the backoff timer that is started in the first system upon receiving the NAS signaling message in the second system (504).

2. A User Equipment, in the following also referred to as UE, (201), comprising:
a backoff timer that is started by the UE in a first mobile communication system, wherein the backoff timer is not related to congestion control;
an intersystem handling circuit (223) that performs an intersystem change from the first system to a second system; and
a receiver (204) that receives a non-access stratum, in the following also referred to as NAS, signaling message from the second system indicating that the UE is required to perform a re-registration procedure or a re-attach procedure in the second system, wherein the UE stops the backoff timer that is started in the first system upon receiving the NAS signaling message in the second system.

3. The method of Claim 1 or the UE of Claim 2, wherein the first mobile communication system is an evolved packet system, in the following also referred to as EPS, and wherein the second mobile communication system is a 5G system, in the following also referred to as 5GS.

4. The method or the UE of Claim 3, wherein the NAS signaling message is a de-registration request message from 5GS.

5. The method or the UE of Claim 3 or 4, wherein the UE is configured with the backoff timer in EPS during a PDN connectivity procedure.

6. The method or the UE of Claim 5, wherein the UE receives an indicator in EPS indicating that the UE is not allowed to reattempt the PDN connectivity procedure in N1 mode or in an equivalent PLMN, in the following also referred to as EPLMN.

7. The method of Claim 1 or the UE of Claim 2, wherein the first mobile communication system is a 5GS, and wherein the second mobile communication system is an EPS.

8. The method or the UE of Claim 7, wherein the NAS signaling message is a detach request message from EPS.

9. The method or the UE of Claim 7 or 8, wherein the UE is configured with the backoff timer in 5GS during a PDU session establishment procedure.

10. The method or the UE of Claim 9, wherein the UE receives an indicator in 5GS indicating that the UE is not allowed to reattempt the PDU session establishment procedure in S1 mode or in an EPLMN.

11. The method of any one of Claims 1 and 3 to 10, or the UE of any one of Claims 2 to 10, wherein the UE also stops all non-congestion backoff timers of the second system.
